# EUROPEAN PATENT APPLICATION

(11) **EP 4 542 514 A1**
(43) Date of publication of application: **23.04.2025**
(21) Application number: 24203728.1
(22) Date of filing: 30.09.2024
(51) Int. Cl.: G07B 15/06, G06Q 20/14, H04W 4/021, G06Q 30/0283, G07B 15/02, G08G 1/01

(54) **METHOD AND SYSTEM FOR GNSS ROAD USAGE CHARGING WITH DYNAMIC RUC ADJUSTMENT USING INVEHICLE DATA**

(30) Priority: 02.10.2023 US 202318375930
(71) Applicant: VM Consolidated, Inc., Mesa, AZ 85201 (US)
(72) Inventor: Chinn, Cathi, Mesa, 85201 (US); Young, Stephen, Mesa, 85201 (US)
(74) Representative: Optimus Patents Limited

(57) **Abstract**

A system, method, and apparatus are provided for dynamically managing road use charges for a vehicle which transmits one or more messages to a backend server of a road use charging (RUC) service with vehicle location data and RUC-related data collected from a memory storage device or one or more in-vehicle sensors which capture the RUC-related data relating to the vehicle operation and design so that the backend server of the RUC service can generate an RUC report which includes one or more adjustments to a RUC rate for the vehicle based on the RUC-related data in the second message.

## Description

### BACKGROUND OF THE INVENTION

### Field of the Invention

The present disclosure is directed in general to the field of road use charging systems. In one aspect, the present disclosure relates to an apparatus, system and method for dynamically tracking and calculating road use charges for vehicle usage of roadways.

### Description of the Related Art

Paying to drive on roads is not a new concept, but new road pricing models are being used to fund the construction, operation, and maintenance of roads across the globe. Today, more than 50 countries have a road pricing model in place and that number is expected to rise to 65 by 2025. In contrast to conventional tolling models which charge drivers a fee for each vehicle when entering a tunnel, crossing a bridge or entering a tollway, road usage charging (RUC) is one of the latest pricing models where vehicle operators are periodically charged based on the number of miles they drive instead of a tax on the number of gallons of fuel they put in their vehicles. Other similar systems include charging distance-based user fees (DBUF), vehicle miles traveled tax (VMTT) program, and a mileage-based user fee (MBUF) program. While distance-based road usage charging is not a new concept, there are currently two very different RUC approaches underway. Private sector-led solutions tend to be high-tech with data automatically collected through plug-in devices or in-vehicle telematics for tracking vehicle mileage. Government-operated solutions, on the other hand, tend to be low-tech and built on existing toll-based systems and manually reported odometer readings.

Both approaches present unique benefits and complexities requiring study and community involvement to resolve and address, but they are both fundamentally limited to capturing a total vehicle mileage number, and have not been used to track or influence vehicle operation or driving behavior. For example, a RUC geographic area can include a variety of zones or regions having differing associated road charges dependent upon factors associated with the vehicle or location (e.g., a number of occupants in the vehicle, vehicle weight, congestion zones, low-emissions zones, and the like). Management of such road charges has traditionally required manual intervention, pre-registration, or roadside equipment to monitor vehicles using cameras or other sensors. Each of these management methods requires significant resources that take away from the road-support function of the revenue generated. As seen from the foregoing, the existing solutions for quickly and efficiently collecting relevant charging information from vehicles travelling on a RUC zone are extremely difficult at a practical level by virtue of the challenges with real time and reliable tracking of RUC-related information for a vehicle.

### BRIEF DESCRIPTION OF THE DRAWINGS

The present disclosure may be understood, and its numerous objects, features and advantages obtained, when the following detailed description of a preferred embodiment is considered in conjunction with the following drawings.
Figure 1 depicts a system block diagram of a RUC region having geofences which enable efficient registration and dynamically adjusted road use charges for different RUC zones using in-vehicle data sensors in accordance with selected embodiments of the present disclosure.
Figure 2 depicts data processing system components of a vehicle and a RUC management system which are communicatively coupled to dynamically track and adjust road use charges for the vehicle in accordance with selected embodiments of the present disclosure.
Figure 3 depicts a simplified flow chart showing the logic for a RUC management system which dynamically adjusts RUC charges by using in-vehicle data sensors to extract RUC-related data in accordance with selected embodiments of the present disclosure.

### DETAILED DESCRIPTION

An apparatus, system, architecture, methodology, and program code are described for an RUC management system which employs in-vehicle data extracted from vehicle storage and one or more in-vehicle sensors, including a global navigation satellite system, to dynamically track and adjust RUC charges for the vehicle. In selected embodiments, a vehicle is connected and configured with an in-vehicle application that communicates over a vehicle network with in-vehicle sensors or databases to track, extract, or collect RUC-related information, such as vehicle type, design, operation, and location parameters, including but not limited to the number of occupants, vehicle weight, number of axels, use of high occupancy vehicle lane, driving in a congestion zone, driving in a low-emissions zone, and the like. In addition, each vehicle may be connected and configured to communicate with an RUC management server system to provide and receive data associated with RUC charging criteria and adjustments thereto. In support of such communication functions, the in-vehicle application may be configured to continuously monitor the vehicle mileage and in-vehicle sensor data readings, and to provide such information to the RUC management server system which calculates any RUC charges or adjustments for inclusion in an RUC report and/or display in the vehicle in a real-time and transparent manner without requiring a vehicle operator to lose focus on driving the vehicle.

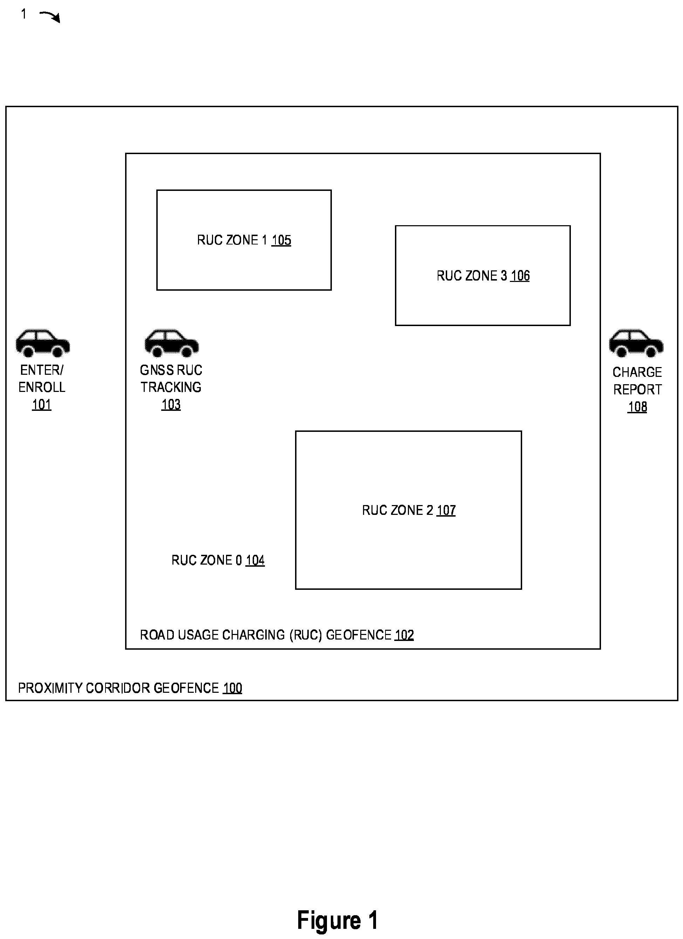

To provide additional details for an improved understanding of selected embodiments of the present disclosure, reference is now made to Figure 1 which depicts a system block diagram 1 of a RUC region having geofences which enable efficient vehicle registration and dynamically adjusted road use charges for different RUC zones using in-vehicle data sensors. Generally speaking, a geofence is a virtual fence or perimeter that is positioned around a physical location that is a region of interest (e.g., RUC zone(s) congestion region(s), corridors, etc.). Similar to a real fence, a geofence virtually delineates the location or region of interest from the area surrounding it, and can have any shape, including having one or more polygons that are virtually superimposed on a map or area. In addition, a geofence can also detect movement inside the virtual boundary. In accordance with the present disclosure, the geofences may be used to delineate the location of one or more RUC zones in a particular geographic area (e.g., city, county, state) that are managed by a RUC authority (or transit authority) which collects RUC charges that can be based on the number of miles the vehicle uses the road.

In addition to using vehicle mileage, the amount of a RUC charge can vary, depending on a variety of parameters, such as having an initial RUC rate for an entry-level RUC zone 104, but having different RUC rates for other RUC zones 105-107. For example, an entry-level RUC zone 0 104 may have a first, relatively low RUC rate for all areas within the RUC geofence area 102 that are not otherwise included within a separately delineated RUC zone. However, the separately delineated RUC zones may charge a higher or lower RUC rate. For example, a RUC zone 1 105 can be delineated for a congestion zone or downtown area where the government entity or RUC authority wishes to discourage vehicle use. RUC zone 1 105 may have a second, relatively higher RUC rate. In addition, a RUC zone 2 106 be delineated for an environmentally sensitive zone where vehicle usage is discouraged, in which case the RUC zone 2 106 may have another, relatively higher RUC rate. In addition, a RUC zone 3 107 be delineated for a smog zone where low-emission vehicle usage is encouraged, in which case the RUC zone 3 107 may have relatively lower RUC rate for zero- or low-emission vehicles.

In addition, there can be a variety of other different RUC rates used based on a variety of charge rate factors. For example, lower RUC rates may be applied to vehicles that are pre-registered with the RUC authority, and higher RUC rates may be applied for vehicles that are not registered. In addition, different RUC rates can apply to vehicles with a minimum number of passengers, or with vehicles exceeding a defined axel count, or with vehicles over a weight threshold, or with vehicles which are towing a trailer, etc. In addition, different RUC rates may be charged for vehicles driving in high-occupancy vehicle lanes.

To facilitate efficient registration of a vehicle, the RUC management system may virtually demarcate the physical boundaries of the geographic area(s) managed by the RUC authority with a proximity corridor geofence 100 that encompasses a road usage charging geofence 102 that surrounds a set of or more RUC zones 104-107 associated with the RUC authority. For example, a city government entity serving as the RUC authority may define a proximity corridor geofence 100 that would completely surround, include, and encompass all RUC zones 104-107 associated with the RUC authority. In addition, each RUC zone would have an associated geofence that encompasses the corresponding RUC zone. As depicted, the road usage charging geofence 102 is just a geofence that encompasses the entry-level RUC zone 0 104. However, each separately delineated RUC zone (e.g., 105) would be a special RUC charging area. For example, if a downtown urban area were a congestion zone, then the RUC authority could delineate a RUC zone geofence area to encompass that area. Thus, the RUC geofence 102 includes multiple RUC zones 105-107 which are managed by the RUC authority (along with non-RUC roads).

The function of the proximity corridor geofence 100 is to enable the identification of any unregistered vehicle as it approaches the RUC geofence 102 in order to facilitate real-time enrollment of the vehicle while it is moving through the proximity corridor geofence 100. For example, a vehicle 101 that has entered the proximity corridor geofence 100 may be configured to detect that it is within the proximity corridor geofence area and to automatically enroll the vehicle with the RUC management system or otherwise verify a current enrollment status of that vehicle with the RUC authority associated with the RUC network. In the event that a vehicle's enrollment query to the RUC management system indicates that that the vehicle registration is not active, the vehicle 101 may be configured to provide an in-vehicle notification to the vehicle operator providing an opportunity to register the vehicle. On an affirmative selection, the vehicle is dynamically registered with the agency through, for example, an API interface. Upon entering the RUC geofence 102, a registered vehicle 103 may employ global navigation satellite system (GNSS) tracking for any RUC charges incurred when the vehicle enters a RUC zone 104. In addition, the registered vehicle 103 may also employ one or more in-vehicle sensors to dynamically track and adjust RUC charges for the vehicle's journey. To this end, the registered vehicle 103 may be configured with an in-vehicle application that communicates over a vehicle network with in-vehicle sensors or databases to track, extract, or collect RUC-related information, such as vehicle type, operation, location parameters, and the like. In addition, each registered vehicle 103 may be connected and configured to communicate over a network with a RUC management server system to provide and receive data associated with RUC charging criteria and charges relating to the location of the vehicle103.

After leaving the RUC geofence 102 or at any time the vehicle is assessed a road use charge within the RUC zone, each registered vehicle 105 may be receive a RUC charge report which specifies the RUC charges accrued from vehicle operation in the relevant RUC zone based on the RUC-related information obtained from the in-vehicle data and mileage. In selected embodiments, the RUC reports are periodically generated by the RUC management system, so they are not necessarily provided immediately to the vehicle operator. Instead, they may be transmitted to the RUC authority for any required transaction processing. In addition or in the alternative, the RUC reports may be sent to directly notify the vehicle operator with real time, transparent information on each RUC charge accrued while travelling in the RUC zone 102.

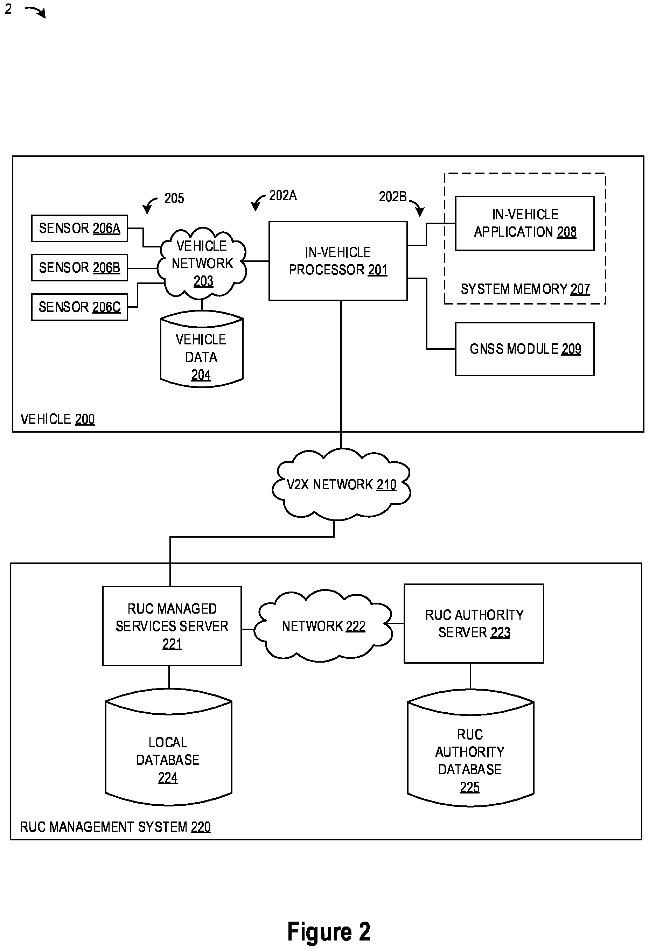

To provide additional details for an improved understanding of selected embodiments of the present disclosure, reference is now made to Figure 2 which depicts data processing system components 2 of a vehicle 200 and a RUC management system 220 which are communicatively coupled to dynamically track and adjust road use charges for the vehicle. As disclosed herein, the method and system for performing GNSS road usage charging with dynamic RUC adjustment using in-vehicle data may be implemented entirely in selected hardware, entirely in software (including firmware, resident software, micro-code, etc.) or in embodiments combining software and hardware aspects that may all generally be referred to herein as a "circuit," "module" or "system." Certain implementations may incorporate all, fewer, or greater than the components described herein.

The depicted data processing system components in the vehicle 200 include one or more in-vehicle processor units 201 that are coupled, respectively, over one or more system bus connectors 202A, 202B to a vehicle network 203, system memory 207, and a GNSS module 209, thereby forming an automotive vehicle network. The processor unit(s) 201 can have various architectures, such as a system on a chip (SOC), electronic control unit (ECU), general-purpose processor, multiprocessor, custom compute accelerator, FPGA, hard-wired ASIC, etc. In other embodiments, the vehicle processor unit 206 may be embodied with processor/transceiver that is part of the vehicle (e.g., infotainment system), or a processor/transceiver that is within the vehicle (e.g., a mobile phone that has access to the CAN sensors or a dongle attached to the OBDII port).

Through the vehicle network 203, the processor unit(s) 201 are coupled over one or more in-vehicle network (IVN) bus connectors 205 to one or more sensors 206A-C and a vehicle data storage device 204. Examples of IVN bus connectors 205 include, but are not limited to, Controller Area Network (CAN) bus, CAN with Flexible Data-Rate (CAN FD) bus, CAN data link layer protocol (CAN XL) bus, Local Interconnect Networks (LIN) bus, FlexRay bus, Ethernet-based network buses, and other types. For example, a CAN bus is a message-based communications bus protocol that is often used within automobiles to enable communications between various electronic control units (ECUs) which perform various control applications, such as for airbags, antilock brakes, cruise control, electric power steering, audio systems, windows, doors, mirror adjustment, battery and recharging systems for hybrid/electric cars, and many more. The CAN bus protocol is used to enable communications between the various bus devices.

As disclosed herein, the sensor(s) 206 may be connected and configured to monitor, track, extract, or collect RUC-related information, such as vehicle type, design, operation, and location parameters, which can be used for calculation of the road usage fees associated with the vehicle traveling in the RUC geographic area. Example sensor data includes, but is not limited to, vehicle location, vehicle occupancy, towing status, fuel type, miles driven, vehicle weight, number of axels, use of high occupancy vehicle lane, and the like. For example, a first sensor 206A may be a camera which detects the lane where a vehicle is travelling, or detects if a trailer is attached to the vehicle, or detects the number of passengers in a vehicle. In addition, a second sensor 206B may be one or more seatbelt sensors or airbag sensors which detect how many passengers are sitting in the vehicle. In addition, a third sensor 206C may be a weight or suspension sensor which detects the vehicle occupancy, towing status, etc. In addition or in the alternative, the sensor(s) 206 may include one or more short and long range radar, camera or lidar sensors.

As disclosed herein, vehicle data storage device 204 may be connected and configured to store unique vehicle identification information (e.g., VIN, vehicle operator name, vehicle license plate number, and the like) or other RUC-related information (e.g., vehicle type, chassis type, vehicle ID, vehicle design, vehicle weight, number of axels, low emission engine type etc.). For example, the vehicle data storage device 204 may include information specifying if the vehicle is an electric or internal combustion or low emission vehicle. In addition, the vehicle data storage device 204 may store data identifying one or more proximity corridor geofence areas or RUC zone areas which are used to evaluate a current location of the vehicle in relation to the geofence area(s). In addition, the vehicle data storage device 204 may store a digital wallet identifier (e.g., Google Pay or Apple Pay or an OEM associated payments system) for automated billing associated with RUC charges incurred by the vehicle within the corridor geofence.

In accordance with selected embodiments of the present disclosure, the vehicle 200 also includes a vehicle location sensor, such as a global navigation satellite system (GNSS) module 209 (e.g., GPS, Galileo, BeiDou, or QZSS) which includes circuitry to perform geolocation functionality. There might be mapping information in the system memory 207, or that could be part of the in-vehicle application 208.

In accordance with selected embodiments of the present disclosure, the vehicle 200 includes a system memory 207 that is populated with data or programming code, including but not limited to operating system (OS) and software programs and any other applications executed by the in-vehicle processor unit(s) 206 for the vehicle 200. In particular, the software programs stored in system memory 207 may include an in-vehicle application 208. The in-vehicle application 208 can, for example, take the form of embedded software running on an infotainment processor of the vehicle 200 that is coupled to a display viewable by a vehicle operator or another processing device that has access to data from the vehicle sensors 206 or data from the data storage device 204. In addition, the in-vehicle application 208 has access to location data generated by the GNSS module 209 to specify a geographic location of the vehicle 200.

In selected embodiments, the in-vehicle application 208 employs the GNSS module 209 or one or more in-vehicle sensors 206 to monitor the location of the vehicle 200 when operating in an RUC zone and to provide RUC-related data to the RUC management system 220 associated with RUC charging criteria in that location for purposes of dynamically tracking and adjusting RUC charges for the vehicle 200 based on RUC-related information that is tracked, extracted, or collected from the sensors 206.

In selected embodiments, dynamic RUC charge tracking and adjustment for the vehicle may require information that is external to the vehicle 200. To this end, the in-vehicle application 208 may be connected and configured to communicate over a vehicle-to-everything (V2X) network 210 with the RUC management system 220 that has access to a local database 224 storing information identifying registered users of the RUC authority. As will be appreciated, the V2X network 210 may be implemented with other networks, such as a vehicle-to-infrastructure (V2I) network or a vehicle-to-network (V2N) network or V2CVN network. To this end, the RUC management system 220 may include a backend RUC managed services server (RMSS) 221 that communicates not only with the local database 224, but also communicates over network 222 with a RUC authority server 223 that stores identification of all registered users of the RUC authority in a RUC authority database 225.

Once connected over the V2X network 210, the in-vehicle application 208 can provide geographic location information to the RMSS 221 in order to determine whether the vehicle 200 is currently traveling along a road in an RUC zone. This may be done by comparing the geographic location for the vehicle 200 with RUC zone geofences defined at the RMSS 221. Alternatively, the RUC zone geofence data can be stored in memory accessible to the in-vehicle application (e.g., database 204) and the determination of whether the vehicle is currently traveling along a road in an RUC zone can be made by the in-vehicle application 208.

In selected embodiments for determining whether the vehicle 200 is currently traveling along a road in an RUC zone, the in-vehicle application 208 is configured to periodically provide the geographic location information from the GNSS module 209 to the RMSS 221. The information provided to the RMSS 221 can include a unique vehicle identifier associated with the vehicle (e.g., VIN) and information associated with the geographic location coordinates. The RMSS 221 can then establish whether the vehicle's geographic location corresponds with an RUC zone. In addition, the RMSS 221 can use the vehicle unique identifier to determine whether the vehicle is registered on the RMSS by performing a lookup on a local database 224. The unique identifier can also be used to perform a reverse lookup for another identifier with which the local database 224 is indexed (e.g., vehicle operator name, vehicle license plate number, and the like). In the event that the RMSS 221 does not have the vehicle in the local database 224, the RMSS 221 can communicate over a network 222 with a RUC authority server to request a search for the vehicle 200 on a RUC authority database 225. If the RUC authority has the vehicle 200 registered, the RMSS 221 can use information from the RUC authority server 223 to have the RUC managed services server 221 add a registration entry in the local database 224.

If the RMSS 221 determines that the vehicle 200 is traveling in an RUC zone, the RMSS 221 can provide a message to the in-vehicle application 208 identifying the RUC geographic area where the vehicle 200 is travelling, and can request additional RUC-related information be provided by the vehicle 200. In addition, the RMSS 221 can request that geographic location information be provided more frequently by the in-vehicle application 208. Alternatively, the in-vehicle application 208 can be configured to respond to the request by automatically increasing the frequency of location reporting to the RMSS 221. In either case, the in-vehicle application 208 can provide geographic location information at a higher periodicity to improve accuracy during the time that the vehicle 200 is traversing the RUC zone.

In addition to providing location information, the in-vehicle application 208 can be configured to provide the other RUC-related information to the RMSS 221. Such RUC-related information includes, but is not limited to, information relating to the vehicle type, engine type, operation, design, use, occupancy, towing status, axle count, and the like. The in-vehicle application 208 accesses the RUC-related information via the in-vehicle network coupled to the sensors 206, data storage 204, and the in-vehicle processor 201 executing the in-vehicle application 208. As disclosed herein, the RUC-related information can be provided by every subsequent message to the RMSS 221 until the vehicle 200 is determined to exit the RUC zone.

Based on the location or RUC-related information provided from the vehicle 200, the RMSS 221 can dynamically calculate and adjust the RUC rate associated with the RUC zone as appropriate. For example, different RUC zones may have different RUC rates, depending on the number of vehicle passengers, then the RMSS 221 may use the extracted passenger-count from the RUC-related information to determine the applicable RUC rate for travelling in a RUC zone. Alternatively, if there is an RUC zone designated for an environmentally-sensitive roadway or area, then the vehicle location data and RUC-related information extracted from the vehicle sensors 206 and database 204 can be used by the RMSS 221 to determine whether the vehicle is a low-emission vehicle that qualifies for reduced RUC charges in the RUC zone, and then charge the appropriate RUC charge. In another example, if there is an RUC zone designated for a congested roadway or area, then the vehicle location data and RUC-related information extracted from the vehicle sensors 206 and database 204 can be used by the RMSS 221 to determine whether the vehicle is a high-occupancy vehicle (that qualifies for reduced RUC charges in the RUC zone), a single-occupancy vehicle (that qualifies for higher RUC charges in the RUC zone), or a trailer-towing vehicle (that qualifies for increased RUC charges in the RUC zone) and then charge the appropriate RUC charge.

While the vehicle 200 travels in the RUC zone, information associated with RUC charges costs can be provided by the RMSS 221 to the in-vehicle application 208 for display to the vehicle operator for RUC charging transparency. In addition or in the alternative, the RMSS 221 may generate an RUC report on a predetermined basis (e.g., monthly) that is sent to the RUC authority server 223 for any RUC transaction processing. Once the RMSS 221 determines that the vehicle 200 is no longer driving in the RUC zone, a message can be provided to the in-vehicle application 208 to reduce the frequency of geographic location reporting and to eliminate further transmission of RUC-related information. The reduced messaging frequency to the RMSS 221 releases transmission bandwidth for other applications and in-vehicle network bandwidth.

The data processing system components 201-209, 221-225 depicted in the vehicle 200 and the RUC management system 220 are not intended to be exhaustive, but rather are representative to highlight components that can be implemented by the present disclosure. For instance, the data processing system components may include alternate memory storage devices. In addition, multiple in-vehicle processor devices may be used to run the in-vehicle application 208 and a separate vehicle infotainment system. And though not shown, it will be appreciated that the in-vehicle processor unit(s) may be coupled over audio/video adapter modules to input/output devices, including but not limited to one or more display screens or audio input/output devices associated with a vehicle infotainment system. These and other variations are intended to be within the spirit, scope and intent of the present disclosure.

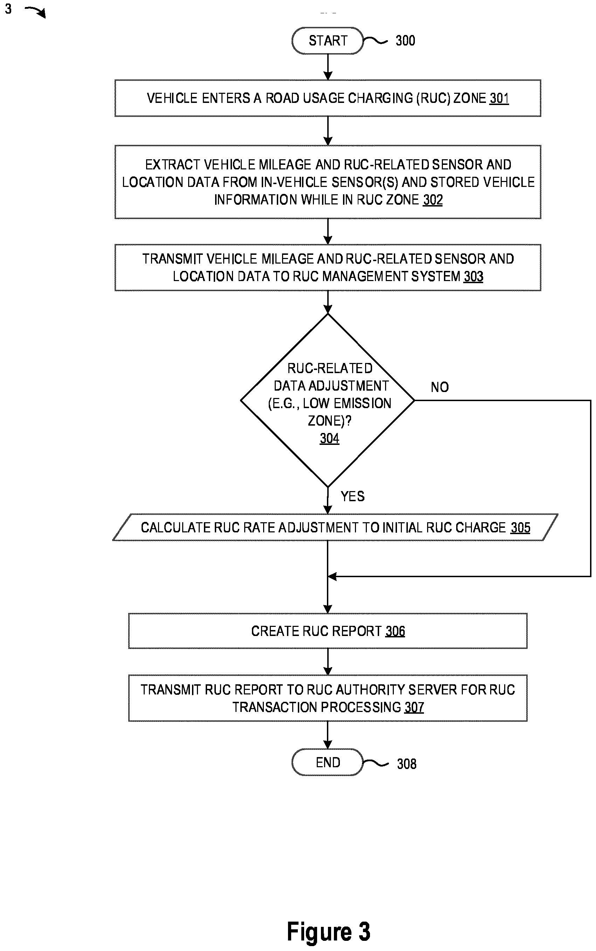

To provide additional details for an improved understanding of selected embodiments of the present disclosure, reference is now made to Figure 3 which depicts a simplified flow chart 3 showing the logic for an RUC management system which dynamically adjusts RUC charges by using in-vehicle data sensors to extract RUC-related data. In an example embodiment, the control logic and methodology shown in Figure 3 may be implemented in whole or in part with hardware or software on an electronic control unit (ECU), microcontroller unit, or digital system processor that includes processor and memory for storing programming control code for controlling the operation of a vehicle which is communication with an RUC management system.

An embodiment of a method for dynamically adjusting RUC charges using in-vehicle data and geographic location information may include steps 300-308 shown in the general order of Figure 3, though the method may include more or fewer steps or can arrange the order of the steps differently than those shown. Generally, the method starts with a start operation 300 and ends with step 308 after processing steps 301-307 which are executed as a set of computer-executable instructions by one or more computer systems or processors and encoded or stored on one or more memories which include a computer readable medium. In other configurations, the method may be executed by a series of components, circuits, and gates created in a hardware device, such as a System of Chip (SOC), Application Specific Integrated Circuit (ASIC), or a Field Programmable Gate Array (FPGA). In other configurations, the method may be executed as an iterative loop where the processing steps 301-307 are periodically repeated on a predetermined schedule or on certain triggering events or when prompted by a vehicle driver.

Once the vehicle drive system starts and is operational at step 300, the vehicle's on-board sensors are activated to collect sensor data reflecting the vehicle operation, status, location, or other RUC-related information. In selected embodiments, the sensor data signals may be provided by vehicle's on-board sensors 206A-C and GNSS module 209 to the system processor 201 which runs the in-vehicle application 208 and GNSS module 209.

At step 301, the vehicle enters an RUC zone. In selected embodiments, the vehicle detects that it has entered a RUC zone (e.g., 105) by using an in-vehicle application or location mapping service (e.g., 208) to monitor the location of the vehicle in relation to one or more RUC geofence areas. In selected embodiments, in order to determine whether the vehicle is currently traveling within a RUC zone (e.g., RUC Zone 1), the in-vehicle application periodically provides the geographic location information to the RUC server or RMSS. The information provided to the RUC server or RMSS can include a unique vehicle identifier associated with the vehicle (e.g., VIN) and information associated with the geographic location coordinates. The RUC server/RMSS can then establish whether the vehicle's geographic location corresponds to the RUC zone.

At step 302, the vehicle begins monitoring, tracking, collecting, and extracting vehicle mileage and RUC-related sensor data and location/mileage data from the vehicle's on-board sensor(s) and/or stored vehicle information while operating in the RUC zone. Examples of extracted RUC-related data include vehicle type, operation, and location parameters. For example, one or more in-vehicle sensors (e.g., 206A-C) can extract information relating to the number of vehicle occupants, vehicle location, vehicle usage of a high occupancy vehicle lane, vehicle trailer towing status, vehicle operation in congested or environmentally-sensitive area, and the like. RUC-related data may also be extracted from vehicle information stored at the vehicle database (e.g., 204), such as a VIN number which can be used to identify the vehicle weight, vehicle axle count, vehicle type (e.g., electric or internal combustion or low emission vehicle), and the like.

At step 303, the vehicle transmits the vehicle location/mileage and RUC-related sensor and location data to the RUC management system. In selected embodiments, the vehicle (e.g., 200) periodically transmits extracted RUC-related data, along with location data, over the V2X network (e.g., 210) to the backend RUC managed services server (e.g., 221) at the RUC management system (e.g., 220). By continuously transmitting vehicle location data, the RUC management system may track and compute the total vehicle mileage in the RUC zone. For example, the mileage may be captured from odometer data provided by the vehicle. Alternatively, the mileage may be calculated based on GNSS data provided by the vehicle to the backend RUC managed services server. In addition or in the alternative to continuously tracking the vehicle mileage, the vehicle may track its mileage and report back to the RUC management system when the vehicle leaves the RUC zone.

At step 304, it is determined if any RUC-related data adjustments are required. In selected embodiments, the backend RUC managed services server (e.g., 221) at the RUC management system 220 assesses the RUC-related data and location data for the vehicle to determine if a RUC rate adjustment is required for an initial RUC rate for the RUC zone. For example, the RUC server/RMSS can examine the RUC-related vehicle data to determine whether the vehicle is operating in a congested area/zone during high traffic hours which may result in increased RUC costs, while conversely, traveling with multiple occupants could result in decreased RUC costs. Alternatively, driving a vehicle in a smog RUC zone can require zero- or low-emission vehicles to avoid an enhanced charge (or other penalty). In addition, the vehicle can provide other RUC-related information to the RUC server/RMSS, such as, for example, the number of passengers in the vehicle (as determined by an in-cabin camera or seat sensors), whether a trailer is being towed (as provided by sensors, cameras, or other means), or how many miles the vehicle has traveled during the current trip or during a current time period. This information can be provided by every message to the server until the vehicle is determined to exit the RUC geofence. Upon receiving the extracted RUC-related information, the RUC server/RMSS can use that information to adjust the road usage charge rate associated with the RUC zone, as appropriate. For example, if the RUC zone is designated for high occupancy usage adjustment during peak travel hours, then the passenger information can be used to determine whether the vehicle during its passage qualifies for high occupancy rates along with a time stamp of the message showing that the vehicle was in that RUC zone.

If the RUC-related data does not indicate that an adjustment is required (negative outcome to detection step 304), then the backend RUC managed services server (e.g., 221) at the RUC management system 220 creates a RUC report at step 306 which is based on the initial RUC rate for the RUC zone. This can occur, for example, if the RUC-related data extracted from the in-vehicle sensors indicates that the vehicle did not qualify for a RUC rate reduction, such as when the extracted vehicle location and RUC-related data indicates that the vehicle is travelling in a low-emission RUC zone, but is not a low-emission vehicle. However, if the RUC-related data indicates that an adjustment is required (affirmative outcome to detection step 304), then the RUC authority server may apply a RUC rate adjustment at step 305. This can occur, for example, if the RUC-related data extracted from the in-vehicle sensors 206 indicates that the vehicle 200 did qualify for a RUC rate reduction, such as by travelling in a high congestion RUC zone while carrying multiple passengers. Other examples of RUC rate adjustments at step 305 can include increasing the RUC rate if the extracted RUC-related data indicates that the vehicle is towing a trailer or exceeding a weight limit or exceeding a maximum axle count or driving in a RUC zone for a congestion area or environmentally sensitive area. In addition, the RUC rate adjustments at step 305 can include decreasing the RUC rate if the extracted RUC-related data indicates that the vehicle is driving in a high occupancy vehicle lane or weighing less than a predetermined weight limit.

As disclosed herein, the dynamic adjustment of road usage charges may start by calculating an initial RUC rate as the vehicle enters the RUC zone that is subsequently adjusted based on the RUC-related data, but it will be appreciated that the road usage charging scheme may also be implemented without requiring the computation of an initial RUC rate that is subsequently adjusted based on the collected RUC-related data. For example, RUC management system may compute a first road usage charge or rate that the RUC-related data indicates is appropriate for the location and the configuration of the vehicle, and then as the vehicle moves along the RUC zone or into another RUC zone, a second road usage charge may be assessed or charged in response to the RUC-related data. Thus, distinct road usage charges may be assessed for different RUC zones without requiring any adjustment of an initial RUC rate.

At step 306, a RUC report may be created. In selected embodiments, the backend RUC managed services server (e.g., 221) at the RUC management system 220 may periodically generate a RUC report with a listing of RUC charges accrued by the vehicle while operation in on or more RUC zones during a given reporting period.

As disclosed hereinabove, the vehicle travels within the RUC zone, it may continuously collect in-vehicle RUC-related data that is sent in one or more messages to the RUC server/RMSS for calculating road usage charge enhancements and discounts, and the resulting adjusted RUC charges can be provided from the RUC server/RMSS to the in-vehicle application to be displayed to the vehicle operator for transparency. If the in-vehicle application determines that the vehicle has stopped traveling (e.g., the vehicle parked), the in-vehicle application can reduce or stop providing reporting messages to the server.

In addition, when location data shows that the vehicle is outside the RUC zone (or geofence), the location data is not retained by the in-vehicle application, thereby providing data privacy by design and avoiding retention of irrelevant data. In other embodiments, the RUC server/RMSS can retain the data from the information messages provided by the in-vehicle application for as long as the regulations associated with the RUC geographic area require, and then be purged. In addition, retained data can be associated with trips taken, as well as over a required period of time. This can enhance auditing of the server data should issues arise.

At step 307, the RUC report, or a portion of the data thereof, is transmitted to the RUC authority for any required RUC transaction processing. In addition or in the alternative, the RUC reports may be sent to directly notify the vehicle operator with real time, transparent information on each RUC charge accrued while travelling in the RUC zone. In selected embodiments, the RUC authority server processes the RUC-related transaction data to bill the vehicle operator for use of roads in the RUC zone during the reporting period. In selected embodiments, the transaction processing may include transmitting information associated with RUC costs from the backend RUC managed services server to the in-vehicle application for display to the vehicle operator, including a description of any RUC-related charge adjustment, thereby reducing the distraction caused to the vehicle operator and making the RUC calculation process transparent to the vehicle operator. Additional RUC-related transaction processing may include providing a message to the in-vehicle application to reduce the frequency of geographic location reporting and to eliminate further transmission of RUC-related information. RUC-related transaction processing may also include sending the vehicle's RUC transaction information to the RUC authority.

By now it should be appreciated that there has been provided an apparatus, method, program code, and system for dynamically managing road usage charges for a vehicle. In the disclosed method, a vehicle processor transmits a first message to a remote road usage charging (RUC) managed services server (RMSS) with location data indicating the vehicle has entered a RUC zone defined by a geofence. In selected embodiments, the vehicle processor identifies the location data by accessing a global navigation satellite system (GNSS) sensor coupled to the vehicle processor. In selected embodiments, the vehicle transmits the first message wirelessly (e.g., over a vehicle-to-everything (V2X) network) to the RMSS. In addition, a RUC application program executing on the vehicle processor collects RUC-related data for the vehicle while operating on the RUC zone by accessing one or more in-vehicle sensors and an in-vehicle data storage device. In selected embodiments, RUC-related data for the vehicle is collected by accessing an in-vehicle location sensor to detect if the vehicle is driving in a high congestion RUC zone or an environmentally sensitive RUC zone. In other selected embodiments, RUC-related data for the vehicle is collected by accessing an in-vehicle sensor to detect if the vehicle is towing a trailer or if the vehicle is driving in a high occupancy vehicle lane. In other selected embodiments, RUC-related data for the vehicle is collected by accessing an in-vehicle camera sensor or seatbelt sensor to detect a number of vehicle passengers. In other selected embodiments, RUC-related data for the vehicle is collected by accessing the in-vehicle data storage device at the vehicle to determine a weight of the vehicle or axel count or engine type for the vehicle. In addition, the vehicle processor transmits a second message with the RUC-related data to the RMSS. In addition, the vehicle processor receives a third message from the RMSS with a RUC report which lists a first road usage charge for viewing by an operator of the vehicle, where the first road usage charge is calculated based on the RUC-related data. In selected embodiments, the first road usage charge is calculated by reducing an initial RUC rate if the location data and the RUC-related data indicate that the vehicle is low-emission vehicle that is properly driving in an environmentally sensitive RUC zone. In other embodiments, the first road usage charge is calculated by increasing an initial RUC rate if the location data and the RUC-related data indicate that the vehicle is driving in a high congestion RUC zone. In other embodiments, the first road usage charge is calculated by reducing an initial RUC rate if the location data and the RUC-related data indicate that occupancy for the vehicle meets a minimum passenger count while driving in a high congestion RUC zone. In other embodiments, the first road usage charge is calculated by increasing an initial RUC rate if the location data and the RUC-related data indicate that the vehicle is towing a trailer in a high congestion RUC zone.

In another form, there has been provided an apparatus, method, program code, and system for dynamically managing road usage charges. In the disclosed method, a road usage charging (RUC) managed services server (RMSS) receives a first message from a vehicle with location data indicating the vehicle has entered onto a RUC zone associated with the RMSS. In addition, the RMSS receives one or more second messages from the vehicle with RUC-related data collected by the vehicle while operating in the RUC zone by accessing one or more in-vehicle sensors and an in-vehicle data storage device. In selected embodiments, the RMSS receives the first message and the one or more second messages over a wireless network (e.g., a vehicle-to-everything (V2X) network) connecting the vehicle to the RMSS. In selected embodiments, the RUC-related data collected by the vehicle indicates if the vehicle is driving in a high congestion RUC zone or an environmentally sensitive RUC zone, or if the vehicle is driving in a high occupancy vehicle lane, or if the vehicle is towing a trailer, or if a number of vehicle passengers exceeds a predetermined number of passengers, or if the vehicle exceeds a weight limit or axel count limit, or if the vehicle is a low-emission vehicle. In addition, the RMSS calculates a first road usage charge for the vehicle operating in the RUC zone based the RUC-related data contained in the one or more second messages. In selected embodiments, the first road usage charge is calculated by reducing an initial RUC rate if the location data and the RUC-related data indicate that the vehicle is properly driving in a high-occupancy lane. In other embodiments, the first road usage charge is calculated by increasing an initial RUC rate if the location data and the RUC-related data indicate that the vehicle is not driving in a high-occupancy lane. In other embodiments, the first road usage charge is calculated by increasing an initial RUC rate if the RUC-related data indicate that the vehicle exceeds a maximum weight measure or axel count or if the location data and the RUC-related data indicates that occupancy for the vehicle does not meet a minimum passenger count while driving in a high congestion RUC zone. In other embodiments, the first road usage charge is calculated by reducing an initial RUC rate if the location data and the RUC-related data indicate that the vehicle is low-emission vehicle that is properly driving in an environmentally sensitive RUC zone. In other embodiments, the first road usage charge is calculated by increasing an initial RUC rate if the location data and the RUC-related data indicate that the vehicle is driving in a high congestion RUC zone. In addition, the RMSS generates a RUC report which lists the first road usage charge for the vehicle operating in the RUC zone.

In yet another form, there has been provided a vehicle road usage charge (RUC) management system, apparatus, method, and program code, for dynamically managing RUC charges. The disclosed vehicle RUC management system includes a vehicle having a processor connected over an in-vehicle network to retrieve in-vehicle data from a vehicle data storage and one or more in-vehicle sensors, where the vehicle is wirelessly coupled to communicate with a RUC authority computer that is operable to dynamically adjust road use charges using in-vehicle data accessed from the vehicle data storage and one or more in-vehicle sensors. As disclosed, the vehicle processor transmits location data accessed by an in-vehicle location sensor indicating the vehicle has entered onto a RUC zone associated with the RUC authority computer and also transmits RUC-related data for the vehicle while operating in the RUC zone by accessing the data storage and one or more in-vehicle sensors. In addition, the vehicle processor receives, from the RUC authority computer, a road usage charge for the vehicle to operate in the RUC zone that is calculated based on the RUC-related data transmitted by the vehicle processor. In selected embodiments, the road usage charge is calculated by adjusting an initial RUC rate. For example, the road usage charge may be calculated by increasing the initial RUC rate if the RUC-related data indicates the vehicle is driving in a high congestion RUC zone or an environmentally sensitive RUC zone. In other embodiments, the road usage charge may be calculated by decreasing the initial RUC rate if the RUC-related data indicates the vehicle is driving in a high occupancy vehicle lane. In other embodiments, the road usage charge may be calculated by increasing the initial RUC rate if the RUC-related data indicates the vehicle is towing a trailer. In other embodiments, the road usage charge may be calculated by decreasing the initial RUC rate if the RUC-related data indicates the vehicle has a number of vehicle passengers which exceeds a predetermined number of passengers. In other embodiments, the road usage charge may be calculated by increasing the initial RUC rate if the RUC-related data indicates the exceeds a weight limit or axel count limit. In other embodiments, the road usage charge may be calculated by decreasing the initial RUC rate if the RUC-related data indicates the vehicle is a low-emission vehicle.

Although the described exemplary embodiments disclosed herein focus on a RUC management system which can be used with a V2X-enabled vehicle to dynamically compute RUC charges based on RUC-related data that is captured with in-vehicle sensors and/or data storage, the present disclosure is not necessarily limited to the example embodiments illustrate herein and may be applied to any RUC charging system. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the spirit and scope of the invention as defined by the appended claims so that those skilled in the art should understand that they can make various changes, substitutions and alterations without departing from the spirit and scope of the invention in its broadest form.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for dynamically managing road usage charges for a vehicle, comprising:
transmitting, by a vehicle processor, a first message to a remote road usage charging (RUC) managed services server (RMSS) comprising location data indicating the vehicle has entered a RUC zone defined by a geofence;
collecting, by an RUC application program executing on the vehicle processor, RUC-related data for the vehicle while operating in the RUC zone by accessing in-vehicle data from one or more in-vehicle sensors and an in-vehicle data storage device;
transmitting, by the vehicle processor, a second message to the RMSS comprising the RUC-related data; and
receiving, at the vehicle processor, a third message from the RMSS comprising a RUC report which lists a first road usage charge for viewing by an operator of the vehicle, where the first road usage charge is based on the RUC-related data.

2. The method of claim 1, wherein the vehicle processor transmits the first message wirelessly to the RMSS.

3. The method of claim 1, where collecting RUC-related data for the vehicle comprises accessing an in-vehicle location sensor to detect if the vehicle is driving in a high congestion RUC zone or an environmentally sensitive RUC zone.

4. The method of claim 1, where collecting RUC-related data for the vehicle comprises accessing an in-vehicle sensor to detect if the vehicle is towing a trailer or if the vehicle is driving in a high occupancy vehicle lane.

5. The method of claim 1, where collecting RUC-related data for the vehicle comprises accessing an in-vehicle camera sensor or seatbelt sensor to detect a number of vehicle passengers.

6. The method of claim 1, where collecting RUC-related data for the vehicle comprises accessing the in-vehicle data storage device at the vehicle to determine a weight of the vehicle or an axel count or engine type for the vehicle.

7. The method of claim 1, where the vehicle processor identifies the location data by accessing a global navigation satellite system (GNSS) sensor coupled to the vehicle processor.

8. The method of claim 1, where the RUC report identifies the first road usage charge as being computed with a reduced RUC rate if the location data and the RUC-related data indicate that the vehicle is low-emission vehicle that is properly driving in an environmentally sensitive RUC zone.

9. The method of claim 1, where the first road usage charge is calculated by increasing an initial RUC rate if the location data and the RUC-related data indicate that the vehicle is driving in a high congestion RUC zone.

10. The method of claim 1, where the first road usage charge is calculated by reducing an initial RUC rate if the location data and the RUC-related data indicate that occupancy for the vehicle meets a minimum passenger count while driving in a high congestion RUC zone.

11. The method of claim 1, where the first road usage charge is calculated by increasing an initial RUC rate if the location data and the RUC-related data indicate that the vehicle is towing a trailer in a high congestion RUC zone.

12. A method for dynamically managing road usage charges, comprising:
receiving, by a road usage charging (RUC) managed services server (RMSS), a first message from a vehicle with location data indicating the vehicle has entered onto a RUC zone associated with the RMSS;
receiving, by the RMSS, one or more second messages from the vehicle with RUC-related data collected by the vehicle while operating in the RUC zone by accessing one or more in-vehicle sensors and an in-vehicle data storage device;
calculating, by the RMSS, a first road usage charge for the vehicle operating in the RUC zone based on the RUC-related data contained in the one or more second messages; and
generating, by the RMSS, a RUC report which lists the first road usage charge for the vehicle operating in the RUC zone.

13. The method of claim 12, where the RUC-related data collected by the vehicle indicates if the vehicle is driving in a high congestion RUC zone or an environmentally sensitive RUC zone, or if the vehicle is driving in a high occupancy vehicle lane, or if the vehicle is towing a trailer, or if a number of vehicle passengers exceeds a predetermined number of passengers, or if the vehicle exceeds a weight limit or axel count limit, or if the vehicle is a low-emission vehicle.

14. A vehicle road usage charge (RUC) management system, comprising:
a vehicle comprising a processor connected over an in-vehicle network to retrieve in-vehicle data from a vehicle data storage and one or more in-vehicle sensors, where the vehicle is wirelessly coupled to communicate with a RUC authority computer that is operable to dynamically adjust road use charges using in-vehicle data accessed from the vehicle data storage and one or more in-vehicle sensors,
wherein the vehicle processor transmits location data accessed by an in-vehicle location sensor indicating the vehicle has entered onto a RUC zone associated with the RUC authority computer and also transmits RUC-related data for the vehicle while operating in the RUC zone by accessing the data storage and one or more in-vehicle sensors, and
wherein the vehicle processor receives, from the RUC authority computer, a road usage charge for the vehicle to operate in the RUC zone that is calculated based on the RUC-related data transmitted by the vehicle processor.

15. The vehicle RUC management system of claim 14, wherein the road usage charge is calculated by adjusting an initial RUC rate by:
increasing the initial RUC rate if the RUC-related data indicates the vehicle is driving in a high congestion RUC zone or an environmentally sensitive RUC zone,
decreasing the initial RUC rate if the RUC-related data indicates the vehicle is driving in a high occupancy vehicle lane,
increasing the initial RUC rate if the RUC-related data indicates the vehicle is towing a trailer,
decreasing the initial RUC rate if the RUC-related data indicates the vehicle has a number of vehicle passengers which exceeds a predetermined number of passengers,
increasing the initial RUC rate if the RUC-related data indicates the exceeds a weight limit or axel count limit, or
decreasing the initial RUC rate if the RUC-related data indicates the vehicle is a low-emission vehicle.
